(19) Europäisches Patentamt
European Patent Office
Office européen des brevets

(11) **EP 2 363 973 A1**

(12) **EUROPEAN PATENT APPLICATION**

(43) Date of publication:
**07.09.2011 Bulletin 2011/36**

(51) Int Cl.:
*H04L 5/04* (2006.01)　　*H04L 25/02* (2006.01)
*H04L 25/03* (2006.01)　　*H04L 5/00* (2006.01)
*H04B 1/10* (2006.01)

(21) Application number: **10305197.5**

(22) Date of filing: **26.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Alcatel Lucent**
**75008 Paris (FR)**

(72) Inventors:
• **Schaepperle, Joerg**
**70180 Stuttgart (DE)**
• **Rueegg, Andreas**
**70469 Stuttgart (DE)**

(74) Representative: **Wetzel, Emmanuelle et al**
**Alcatel-Lucent Deutschland AG**
**Intellectual Property & Corporate Standards**
**Lorenzstrasse 10**
**70435 Stuttgart (DE)**

(54) **Method for decoding a composite radio signal, and corresponding receiver**

(57) The present invention relates to a method for decoding a composite radio signal at a receiver in a radio communication system, said composite radio signal being a superposition of at least two signals sent by at least one transmitter, said at least two signals being transmitted using the same radio resource and comprising user data,.

According to the present invention, the method comprises the step of decoding a signal out of said composite radio signal taking into account a channel estimation, said channel estimation being a function of received user data from a previously decoded signal out of said composite radio signal.

**Fig. 2**

**Description**

**BACKGROUND OF THE INVENTION**

The present invention relates to the field of telecommunication, and more specifically to a method for decoding a composite radio signal at a receiver in a radio communication system.

Superposition coding or RDMA ( radial space division multiple access) is known for multi-user access based on the non orthogonal superposition of several users on the same resource in a way that a separation of the different users at the receiver is still possible.

More precisely, at least two users share the same resource during at least one predefined period of time. Applied to an OFDM system, this means that the two users send/receive signal to/from a base station on the same frequency sub carriers and during the same time slots of the OFDM frames during the predefined period of time. Usually no spatial separation of the users using for example beam forming techniques is possible for the superposed signals, e.g. because the number of antennas at the common access point is smaller than the number of users.

The selection of the users which can share the same resource is performed by the resource allocation module using algorithms which check if a successful detection of the different superposed signals is possible..

For example, specific signal properties among which we can enumerate coding schernes, modulation scheme, transmit power, receive power are taken into account for the selection of users which can share the same resource and are used at the receiver for decoding the composite radio signal. Additionally characteristics of the channels are taken into account.

Especially, it is possible to decode two users using the same resource and seen from the base station with a similar angle when the received power from the two users is sufficiently different. The user with the highest received power can be decoded since the user with a lower received power can be considered as noise for decoding the user with the highest received power. Then subtracting the contribution from the user with the highest received power from the composite radio signal enables it to decode the user with the lowest received power.

More generally, the detection of the different signals of the composite radio signal can be done by successive interference cancellation. A first signal possibly the one received with the highest signal to interference ratio is decoded, its contribution to the composite radio signal is subtracted from the composite radio signal then signal received with the second highest signal to interference ratio is detected from the remaining part of the composite radio signal and so on until all superposed signals have been decoded.

This method shows some performance issues especially for the detection of the signals of the composite radio signal showing low signal to interference ratio and decoded after a different approximations have been made when decoding the stronger signals in the composite radio signal.

A particular object of the present invention is to provide for a more reliable method for decoding a composite radio signal where different signals are superposed using the same resource.

Another object of the invention is to provide a receiver for decoding a composite radio signal.

**SUMMARY OF THE INVENTION**

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to presents some concepts in a simplified form as a prelude to the more detailed description that is discussed later.

The objects of the invention presented above, and others that appear below, are achieved in particular by a method for decoding a composite radio signal according to claim 1, and a receiver of a radio communication network according to claim 8.

According to the present invention, a signal part of the composite radio signal is decoded by taking into account a channel estimation which has been obtained as a function of received user data of a signal previously decoded out of said composite radio signal.

The method according to the present invention presents the advantage to have much more reliable channel estimation as it is obtained not only as usual by relying on pilot/reference signal information sent together with the signal but also on decoded or soft decoded user data. This way, the error on the channel estimation is minimized enabling it to subtract a more reliable value corresponding to the contribution of a first decoded signal including its channel contribution from the composite radio signal.

Another advantage of the present invention consists in obtaining better performance without increasing the number of pilots or reference signal due to the fact that the user data themselves are used, possibly in addition to the pilot reference signal, to determine a more precise channel estimation.

Another advantage of the present invention consists in its use for channel estimation in the framework of RDMA ( Radial Space Multiple Access).

Further advantageous features of the invention are defined in the dependent claims.

**BRIEF DESCRIPTION OF THE DRAWINGS**

Other characteristics and advantages of the invention will appear on reading the following description of a preferred embodiment given by way of non-limiting illustrations, and from the accompanying drawings, in which:

- Figure 1 shows a simplified system in which the present invention can be implemented;
- Fig. 2 shows a first embodiment of a receiver according to the invention;
- Figure 3 shows a second embodiment of a receiver according to the invention.

**DETAILED DESCRIPTION OF THE INVENTION**

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any boxes shown in the Figures are conceptual only. Their function may be carried out through the operation of program logic, through dedicated logic, through the interaction of program control and dedicated logic, or even manually, the particular technique being selectable by the implementer as more specifically understood from the context.

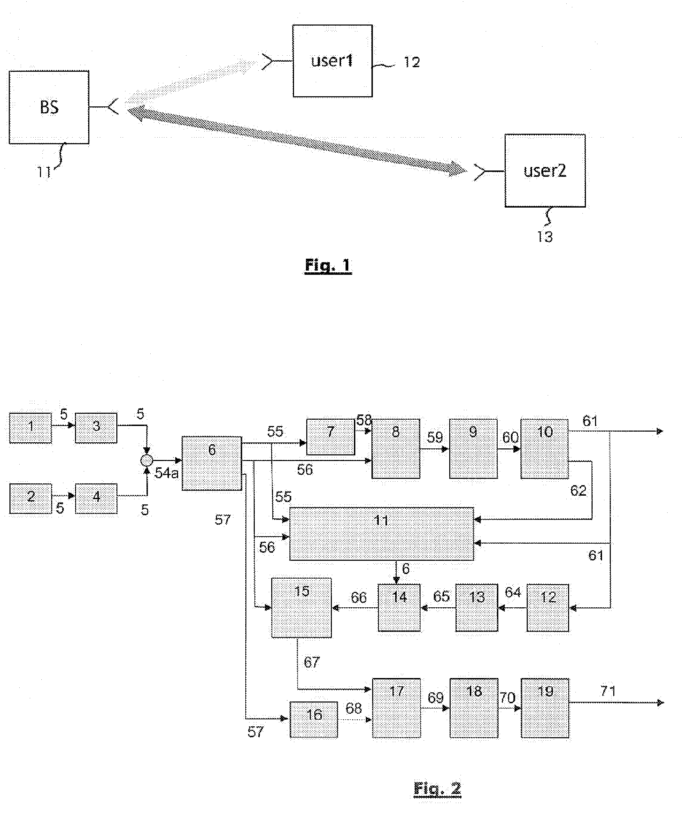

Figure 1 shows a simplified system in which the present invention can be implemented. This system comprises a base station 1 and two users 12, 13. Users 12 and 13 communicate with base station 11. The present invention can be used for uplink communication where users 12 and 13 work as transmitters and base station 11 works as receiver as well as for downlink communication where users 12 and 13 work as receiver and base station 11 work as transmitter.

According to the present invention, users 12 and 13 share the same resource during at least one predefined period of time. Applied to an OFDM system, this means that the two users send/receive signal to/from base station 11 on the same frequency sub carriers and during the same time slots of the OFDM frames during the predefined period of time.

The term of "same resource" preferably also encompasses the fact the two or more superposed users show no spatial separation that may be decoded in the framework of a multi antenna system as for example in space division multiple access with beam forming functionality. Even if the present invention can also be applied where spatial separation is possible, it shows more usefulness when no spatial separation is possible as for example in single antenna systems or in multi antenna systems where the users show a similar angle seen from the base station.

The selection of the users which have to share the same resource is preferably performed centrally by the resource allocation module using algorithms which are out of scope of the present invention. The present invention concentrates on a method for improving the separation of the superposed received signals referred as composite radio signal at the receiver.

The signals emitted/destined to user 12 respectively user 13 have specific signal properties among which we can enumerate the coding scheme, the modulation scheme, the transmit power, the receive power. These signal properties, or a subset of them, must be known or forwarded to the receiver which will use them for performing the decoding steps for separating the two signals.

It will be clear for a person skilled in the art that the present invention may be used for more than two users communicating with a base station or a relay station using simultaneously the same resource. It will also be clear for a person skilled in the art that a single user may generate two or more signals e.g, through two or more antennas that may be separated at a base station or a relay station using the method according to the present invention.

Fig. 2 shows a first embodiment of a receiver according to the invention receiving a composite radio signal from two transmitters.

A first wireless transmitter 1 sends an encoded and modulated signal 51 through a first channel 3. A second transmitter 2 sends a second encoded and modulated signal 52 through a second channel 4. Signals 51 and 52 are influenced and distorted by the channel and modified in signals 53 and 54 which are added in the air 5 and form a superposed composite radio signal. The sum signal 54a is received by the receiver front end 6.

The front end 6 separates the user data signal 56, which is a sum of user data signals from the first and the second receiver, from pilot signals, or reference signal sent by the first transmitter 55 and pilot signals or reference signals sent by the second transmitter 57.

The separation can for example be done based on orthogonal transmission methods like OFDM(A). The pilot /reference signals from the first and the second transmitter may be orthogonal or non-orthogonal. In the first case, they can be separated by the front end. In the second case, pilot reference signals 55 and 57 may be, as for user data, a superposition of pilot/ reference signals sent by the two transmitters 1, 2.

In a first step, a first signal will be decoded out of the composite radio signal. Usually the signal showing the highest signal to interference ration is decoded first. In this example the signal sent from transmitter 1 will be decoded first.

A first channel estimator 7 estimates the characteristic of the first channel 3 based on the pilot / reference signal 55 and generates as output channel characteristic 58.

A first equalizer 8 equalizes the data signal 56 using the estimated channel characteristic 58. The equalized signal 59 is demodulated in demodulator 9. The demodulated signal 60 is decoded in decoder 10. The decoded user data 61 corresponding to user data sent by transmitter 1 are available at the output.

The quality of the channel estimation usually depends on the power of the reference/pilot signals and the amount of time-frequency resources spent for the pilot/reference signal. Typically, it is sufficient for decoding the first signal which shows a high signal to interference ratio.

The present invention is based on the assumption that the sole pilot/reference signal-based channel estimation is not precise enough to perform interference cancellation and not precise enough for decoding of a second or more weaker signals out of the composite radio signal.

According to the invention, a second channel estimator 11 for the first channel is used for a refinement of the channel estimation. It preferably takes as input the pilot/reference signal from the first transmitter 55, the input user data signal 56, the decoded user data from the first transmitter 61. Alternatively or in addition of the final decoded user data, additional information from the decoder like e.g. soft decoded user data may be taken into account.

Based on pilot/reference signals and known user data bits, the channel estimator 11 provides an improved estimation of the channel characteristic 63.

Following this refined estimation of channel 3, the decoding can proceed with the decoding of signal 2 out of composite radio signal 54a the following way:

The decoded user data signal 61 or the soft decoded data signal 62 or both is/are re-encoded in encoder 12. The re-encoded signal 64 is modulated at modulator 13. If required pilots can be added in order to perform interference cancellation on the pilots. The re-modulated signal 65 is distorted by a channel model 14 using the improved estimation of the channel characteristic 63 calculated according to the present invention. The distorted signal 66 is a reliable approximation to that part of the composite radio signal that results from the signal transmitted by transmitter 1.

In an interference cancellation block 15 the distorted signal 66 is removed from the composite radio signal e.g. by subtraction. Signal 67 contains that part of the received signal which results from the signal transmitted by transmitter 2. A channel estimator 16 for the second channel estimates the characteristic of the second channel based on the reference/pilot signal 57 transmitted by the second transmitter.

If the two reference signals are not orthogonal, interference cancellation may be done also for the reference signals.

A second equalizer 17 equalizes the user data signal 67 of the second user based on the estimate of the characteristic 68 of the second channel. The equalized second signal is demodulated by a second demodulator 18. The demodulated signal 70 is decoded by a second decoder 19. The decoded signal 71 is available at the output.

As an extension to this method, decoded signal 71 can also be fed back to the channel estimator 11 and used to improve the refined channel estimation for the first channel and to another channel estimator to improve the channel estimation of the second channel in case further signal would have been superposed in the composite radio channel.

In a preferred embodiment of the present invention, if the soft decoded signal 62 is used as entry of the channel estimator 11, a target grade of precision to reach for the channel estimation may be evaluated in order to get a sufficient precision when decoding all superposed signals but to avoid a too high, unnecessary, precision.

For this purpose, the target precision may depend on the signal properties of the different superposed signals as for example the used modulation or coding schemes, the used transmit power the expected received power and so on. Such information are preferably available at the receiver which decodes the composite radio channel.

Alternatively the grade of precision may depend on information about one or more of the next signals to decode out of the composite radio signal information which is preferably received at the receiver by control signalling.

The grade of precision impacts for example the number of iterations to be performed when obtaining the soft decoded data in decoder 10 or the algorithm used for obtaining the soft decoded data in decoder 10, the number of iteration on the one hand and the used algorithm in the other hand resulting in different grade of precision.

In the downlink direction where the data are sent from a base station to a terminal, the composite radio signal contains signals which experiments the same channel characteristic, we do not have two channel characteristics as it was the case in the uplink direction described in figure 2. However, we still have usually pilot signals for each one of the signal composing the composite radio signal. Consequently, an advantageous embodiment of the present invention would be to consider both pilot signals of the already decoded signal and of the next signal to decode in addition of the user data of the already decoded signal to determine a refined channel estimation. This would be the advantage to still increase the performance of the decoding.

It will be understood by the persons skilled in the art that the diagram of figure 2 is more a sequential functional diagram than a real receiver implementation. A real receiver implementation would preferably merge in a single entity all blocks performing the same type of functions. Especially all blocks performing channel estimation 7, 11, 16 would preferably be implemented in a single entity, similarly all blocks performing channel equalization or demodulation or decoding will be implemented in single entities. It is even foreseen that modulation/demodulation performed at blocs 9, 13, 18 may be implemented in the same module. Similarly, coding/decoding performed at block 10, 12, 19 may be implemented in the same module.

By extension and due to the high integration of a number of functions on a single chip, several of the previously described functions may be implemented on the same hardware component of the receiver.

It will be further understood by a person skilled in the art that even if the use of pilot/reference signal is advantageous for decoding signals, the use of pilot/reference signal is not mandatory in the framework of the present invention.

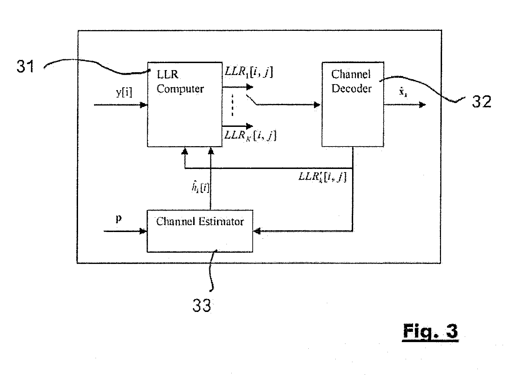

Figure 3 shows a second embodiment of a receiver according to the invention.

In this embodiment, a SIC receiver to decode multiple superimposed users is used to explain the concept of the invention.

The receiver structure comprises a log likelihood ratio (LLR) computer 31, a channel decoder 32 and a channel estimator 33. This receiver structure can be used to iteratively decode several users and through the iterations improve successively the channel estimates by combining pilot sequences and a priori knowledge from the channel decoder 32 about the transmitted user data.

The LLR computer 31 isolates the different user's signals by modelling interference of other users as Gaussian Noise. For that purpose, an estimation of the channel is needed, which is obtained from reference/pilot signals only in the first iteration.

In each iteration, one user's signal is isolated and passed to the channel decoder 32 (for example a Irellis based CTC decoder) that generates the LLR' values representing an improved version of the user's LLR (the code structure is used to remove errors from the signal).

The improved LLRs are fed back to the LLR computer 31 but also to the channel estimator 33. The channel estimator 33 improves the previous channel estimates, by taking into account this a priori information about the different user's signals and uses in addition to the pilot sequence also user data carriers (taking into account the interference coming from the different users, which is partly known through the LLRs fed back from the channel decoder). The channel estimation itself can be done in different ways, using for example a Wiener Filter, 1D or 2D interpolation, time-domain processing, etc.

Iteratively, as the estimated decoded user's signals increase in quality, the channel estimates improve as well which leads again to better user's signal decoding.

In a preferred embodiment of the present invention, a grade of precision to reach for the channel estimation value is evaluated in order to get a sufficient precision when decoding all superposed signal but to avoid a too high, unnecessary, precision.

For this purpose, the target precision may depend on the signal properties of the different superposed signals as for example the used modulation or coding schemes, the used transmit power the expected received power and so on. Such information are preferably available at the receiver which decodes the composite radio channel.

Alternatively the grade of precision may depend on information about one or more of the next signals to decode out of the composite radio signal information which is preferably received at the receiver by control signalling.

The grade of precision impacts for example the number of iterations to be performed when decoding the composite radio signal, each of these iterations resulting in an iterative improvement of the channel estimation. The target grade of precision can be for example translated in a number of iterations at the LLR computer.

The following gives a mathematical representation of a candidate channel estimator 33 making use of the before mentioned concept. An MMSE approach is considered to derive the channel estimation filter coefficients.

This mathematical representation is for illustration only and should not be interpreting as unduly restricting the scope of the invention. Especially even if presented for the uplink transmission direction, the scheme is also applicable to the downlink transmission direction, the type of considered modulation is also only exemplary, the single antenna context is only for simplification and it will be clear that the same principle can be used in the context of multiple antennas or antenna arrays. The OFDM resource is also not the only type of resource which can be used in the framework of the invention, pure TDMA or FDMA or OFDMA or any combination of them is equally qualified for the use of the present invention.

It is considered an uplink scenario where $K$ users transmit at the same time on the same OFDMA resources with total overlap of their baseband transmit symbols $x_k[i]$ where is the complex transmit symbol index and k the user index with $0 < k \leq K$. Each symbol $x_k[i]$ corresponds to one of the QAM constellation points $s$. for $0 < n \leq 2^u$. We consider a single-antenna setup. Assuming a time invariant channel for the duration of one OFDM symbol, we can formulate the baseband receive symbol as

$$y[i] = \mathbf{H}^T[i]\mathbf{x}[i] + n[i]$$

where $n[i]$ is zero-mean, white Gaussian noise with variance $\sigma^2$, $x[i]=[x_1[i],x_2[i],...,x_k[i]^T$ the vector of all user's transmit symbols and H[$i$] the channel vector.

Assumed being the subset of $i$ describing the index of data symbols (tones) and $p$ the subset describing pilot symbols (tones).

We consider the pilots being orthogonal in the time-frequency plane and therefore the receive channel coefficients $\tilde{H}_t[p]$ at pilot position $p$ of user $k$ can be written as

$$\tilde{H}_k[p] = x_k H_k[p] + Z[p]$$

where $H_k[p]$ is the original channel coefficient, $x_k$ the known pilot symbol and $Z[p]$ the noise on the carrier.

The same way we can define the receive channel coefficient on the user data carriers which is a mix of modulated user data and noise.

$$\tilde{H}_k[d] = x_k[d]H_k[d] + Z[d] + \sum_{l \neq k} x_l[d]H_l[d]$$

The estimated channel of user $k$ at data tone $i$ is obtained by the

**linear filter**

$$\hat{H}_k[i] = \mathbf{c}_k^H[i]\tilde{\mathbf{H}}_k[i]$$

where the vector $\tilde{H}_k$ is constructed by selecting different indices $p$ and $d$ and filling the vector with respective $\tilde{H}_k[p]$ and $\tilde{H}_k[d]$. $\tilde{H}_k$ contains information from receive pilot and user data tones that shall contribute to the channel estimate at data tone $i$. $d$ and $p$ could for example be the indices of all pilot and user data positions of one PUSC tile.

The MMSE optimization criteria can be stated as

$$\mathbf{c}_k[i] = \arg\min_{\mathbf{c}} E\{|H_k[i] - \mathbf{c}_k^H\tilde{\mathbf{H}}_k[i]|^2\}$$

and its solution is

$$\mathbf{c}_k[i] = (E\{\tilde{\mathbf{H}}_k[i]\tilde{\mathbf{H}}_k^H[i]\})^{-1} E\{\tilde{\mathbf{H}}_k[i]H^*_k[i]\}$$

where $H_k[i]$ is the unknown channel coefficient at the user data tone which is estimated.

After some calculation, $c_k[i]$ can also be written as

$$\mathbf{c}_k[i] = (\bar{\bar{\mathbf{x}}}_k[i]\mathbf{R}_{H_k}[i]\bar{\bar{\mathbf{x}}}_k^H[i] + \sum_{l \neq k}\bar{\bar{\mathbf{x}}}_l[i]\mathbf{R}_{H_l}[i]\bar{\bar{\mathbf{x}}}_l^H[i] + \sigma^2\mathbf{I})^{-1}\bar{\bar{\mathbf{x}}}_k[i]\mathbf{r}_k[i]$$

where $R_{H_l}$ is the autocorrelation matrix of the channel of user k for the selected user data and pilot positions (in the correct order). 1 is the identity matrix with dimension of the number of selected subcarriers (pilot or user data). $r_k$ is the cross-correlation vector of the channel of user $k$ between subcarrier position $i$ (the one that has to be calculated) and all selected user data and pilot positions that are used for channel estimation.

$\bar{x}_k[i]$ is the diagonal matrix with the soft estimated transmit symbols (and the known pilot symbols) of the selected pilot and user data carriers of user $k$ (based on the previous iteration).

## Claims

1. Method for decoding a composite radio signal at a receiver in a radio communication system, said composite radio signal being a superposition of at least two signals sent by at least one transmitter, said at least two signals being transmitted using the same radio resource and comprising user data, said method comprising the step of decoding a signal out of said composite radio signal taking into account a channel estimation, said channel estimation being a function of received user data from a previously decoded signal out of said composite radio signal.

2. Method according to claim 1, wherein the precision of the performed channel estimation depends on an estimate of signal properties of one or more of the next signals to decode in the composite radio signal.

3. Method according to claim 1, wherein a targeted precision of the channel estimation depends on information of one or more of the next signals to decode received by control signaling.

4. Method according to claim 1, further comprising a first channel estimation step to decode a signal based on a reference signal sent together with said signal and a second channel estimation step based on said reference signal and said received user data.

5. Method according to claim 1, further comprising the step of refining iteratively said channel estimation by combining received reference signal and received user data.

6. Method according to claim 1, wherein said composite signal is sent in the downlink direction from a base station to a terminal, a first decoded signal out of the composite signal and a next to decode signal out of the composite signal being each associated to a reference signal, said method further comprising the step of performing the refined channel estimation depending both reference signals and on said user data of said first decoded signal.

7. Method according to claim 1, wherein said method is applied in a single antenna system.

8. Receiver to be used in a radio communication system for decoding a composite radio signal, said composite radio signal being a superposition of at least two signals, said at least two signal being transmitted using the same radio resource, said receiver comprising:

   • Decoding means for decoding a signal out of said composite radio signal taking into account a channel estimation;
   • Channel estimation means for generating a refined channel estimation as a function of received user data from one or more previously decoded signals out of said composite radio signal.

9. Receiver according to claim 8, being a base station of a radio communication network

10. Receiver according to claim 8, being a terminal of a radio communication network.

**Fig. 1**

**Fig. 2**

**Fig. 3**

**EP 2 363 973 A1**

Europäisches Patentamt
European Patent Office
Office européen des brevets

# EUROPEAN SEARCH REPORT

Application Number

EP 10 30 5197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUHN V ED - INSTITUTE OF ELECTRICAL AND ELECTRONICS ENGINEERS: "Iterative interference cancellation and channel estimation for coded OFDM-CDMA" 2003 IEEE INTERNATIONAL CONFERENCE ON COMMUNICATIONS (CAT. NO.03CH37441) IEEE PISCATAWAY, NJ, USA; [IEEE INTERNATIONAL CONFERENCE ON COMMUNICATIONS],, vol. 4, 11 May 2003 (2003-05-11), pages 2465-2469, XP010642890 ISBN: 978-0-7803-7802-5 * abstract * * I. Introduction * * II.B. Channel Model * * III. Nonlinear successive interference cancellation * * IV. Channel estimation * ----- | 1-10 | INV. H04L5/04 H04L25/02 H04L25/03 H04L5/00 H04B1/10 |
| X | SCHOENEICH H ET AL: "Iterative semi-blind single-antenna cochannel interference cancellation and tight lower bound for joint maximum-likelihood sequence estimation" SIGNAL PROCESSING, ELSEVIER SCIENCE PUBLISHERS B.V. AMSTERDAM, NL LNKD-DOI:10.1016/J.SIGPRO.2004.07.012, vol. 84, no. 11, 1 November 2004 (2004-11-01), pages 1991-2004, XP004591295 ISSN: 0165-1684 | 1-5,7-10 | |
| Y | * abstract * *1. Introduction * *2. Channel model * *4.1 Initial channel estimation * *4.2 Joint data and channel estimation * *4.3 iterative update process * ----- -/-- | 6 | TECHNICAL FIELDS SEARCHED (IPC) H04L H04B |

The present search report has been drawn up for all claims

| Place of search | Date of completion of the search | Examiner |
|---|---|---|
| Munich | 8 July 2010 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

**EUROPEAN SEARCH REPORT**

Europäisches
Patentamt
European
Patent Office
Office européen
des brevets

Application Number

EP 10 30 5197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/035993 A1 (PRESCIENT NETWORKS PTY LTD [AU]; FAULKNER MICHAEL [AU]; GOR LEON [AU]) 5 April 2007 (2007-04-05) * abstract * * page 1, line 27 - line 30 * * page 2, line 5 - line 14 * * page 3, line 23 - page 4, line 23 * * page 6, line 11 - line 24 * * page 12, line 20 - line 29 * ----- | 1-5,8-10 | |
| X | JAEKYUN MOON ET AL: "Channel estimation for MIMO-OFDM systems employing spatial multiplexing" 2004 IEEE 60TH VEHICULAR TECHNOLOGY CONFERENCE. VTC2004-FALL - 26-29 SEPT. 2004 - LOS ANGELES, CA, USA, IEEE - PISCATAWAY, NJ, USA LNKD-DOI:10.1109/VETECF.2004.1404745, vol. 5, 26 September 2004 (2004-09-26), pages 3649-3654, XP010787557 ISBN: 978-0-7803-8521-4 * abstract * * III.A. Initial channel estimation based on training symbol* *III.B. Improving Initial Channel estimation using the signal-field symbol * ----- | 1-5,8-10 | |
| X Y | US 2007/286238 A1 (WANG SHU [US] ET AL) 13 December 2007 (2007-12-13) * abstract * * paragraph [0039] - paragraph [0042] * * paragraph [0053] - paragraph [0055] * * paragraph [0059] - paragraph [0060] * * paragraph [0065] * * paragraph [0077] - paragraph [0079] * * paragraph [0082] * ----- -/-- | 1,8 6 | TECHNICAL FIELDS SEARCHED (IPC) |

The present search report has been drawn up for all claims

| Place of search | Date of completion of the search | Examiner |
|---|---|---|
| Munich | 8 July 2010 | Palacián Lisa, Marta |

EPO FORM 1503 03.82 (P04C01)

Europäisches
Patentamt
European
Patent Office
Office européen
des brevets

# EUROPEAN SEARCH REPORT

Application Number

EP 10 30 5197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ASAI Y ET AL: "Experimental evaluation of SDM-COFDM using hierarchical ici canceller with pilot-based channel tracking in fast multipath fading" 2004 IEEE 60TH VEHICULAR TECHNOLOGY CONFERENCE. VTC2004-FALL - 26-29 SEPT. 2004 - LOS ANGELES, CA, USA, IEEE - PISCATAWAY, NJ, USA LNKD-DOI:10.1109/VETECF.2004.1400435, vol. 3, 26 September 2004 (2004-09-26), pages 2220-2224, XP010787034 ISBN: 978-0-7803-8521-4 * II. Configuration of SDM-COFDM prototype using hierarchical ICI canceller* * III. Pilot-based channel tracking for SDM-COFDM * ----- | 1-10 | |
| A | US 2004/229625 A1 (LAROIA RAJIV [US] ET AL) 18 November 2004 (2004-11-18) * paragraph [0003] - paragraph [0005] * * paragraph [0019] * * paragraph [0022] * * paragraph [0025] * * paragraph [0027] * * paragraph [0075] * * paragraph [0079] * * paragraph [0089] - paragraph [0090] * ----- | 1-10 | TECHNICAL FIELDS SEARCHED (IPC) |

The present search report has been drawn up for all claims

| Place of search | Date of completion of the search | Examiner |
|---|---|---|
| Munich | 8 July 2010 | Palacián Lisa, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 10 30 5197

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2010

| Patent document cited in search report | Publication date | Patent family member(s) | Publication date |
|---|---|---|---|
| WO 2007035993 A1 | 05-04-2007 | NONE | |
| US 2007286238 A1 | 13-12-2007 | EP 2020158 A2<br>JP 2009538547 T<br>WO 2007123366 A2<br>KR 20080108320 A | 04-02-2009<br>05-11-2009<br>01-11-2007<br>12-12-2008 |
| US 2004229625 A1 | 18-11-2004 | NONE | |

EPO FORM P0459

For more details about this annex : see Official Journal of the European Patent Office, No. 12/82